# EUROPÄISCHE PATENTSCHRIFT

(11) **EP 0 652 814 B1**
(45) Veröffentlichungstag und Bekanntmachung des Hinweises auf die Patenterteilung: **25.09.1996**
(21) Anmeldenummer: 93917660.8
(22) Anmeldetag: 27.07.1993
(51) Int. Cl.: B23D 65/00, B23D 63/18, B23D 63/14, B23D 63/00

(54) **VORRICHTUNG FÜR DAS BESTÜCKEN VON SÄGEBLATT-STAHLKERNEN MIT HARTSTOFFSEGMENTEN**
DEVICE FOR HARD-FACING STEEL SAW BLADE CORE
DISPOSITIF POUR EQUIPER LES AMES DE LAMES DE SCIES EN ACIER AVEC DES SEGMENTS EN MATERIAU DUR

(30) Priorität: 29.07.1992 CH 2388/92
(43) Veröffentlichungstag der Anmeldung: 17.05.1995
(73) Patentinhaber: M.A.E.M. Aktiengesellschaft, FL-9494 Schaan (LI)
(72) Erfinder: MEYER, Marc-André, I-25080 Padenghe sul Garda (IT)
(74) Vertreter: Büchel, Kurt F., Dr.
(86) Internationale Anmeldenummer: EP9301992
(87) Internationale Veröffentlichungsnummer: WO9403297

(56) Entgegenhaltungen:
- DE-A- 1 552 716
- DE-A- 2 111 634
- FR-A- 2 243 049
- FR-A- 2 282 969
- US-A- 3 279 282

## Beschreibung

Die Erfindung betrifft eine Vorrichtung zum Bestücken von Sägeblatt-Stahlkernen entsprechend dem Oberbegriff des Anspruches 1. Sägeblätter, insbesondere Kreissägeblätter sind in vielen Fällen an den Sägezähnen mit Hartstoffen beschichtet, die die Standfestigkeit, Vorschubgeschwindigkeit, Schnittgeschwindigkeit usw. des Sägeblattes erhöhen. Solche Hartstoffe im Sinne der Erfindung sind Hartmetallplättchen, Diamantsintersegmente usw.

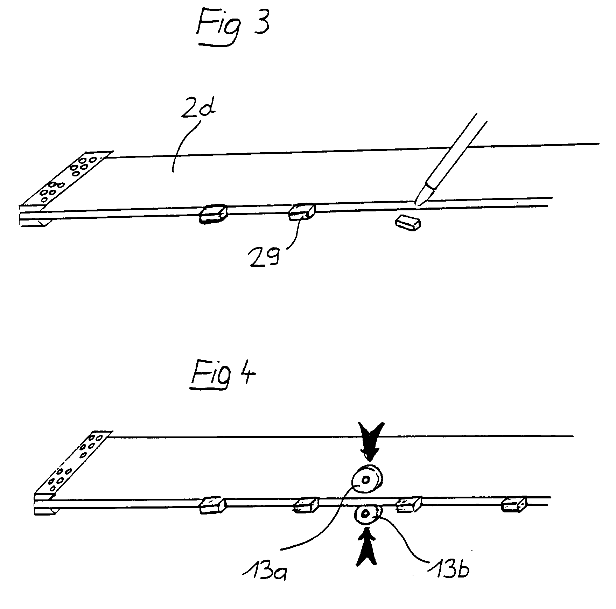

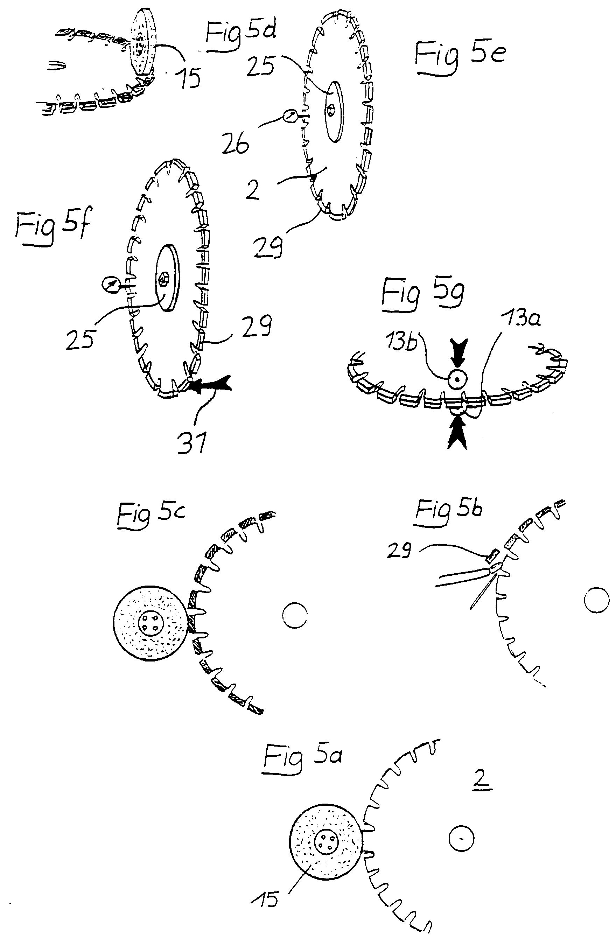

Der Sägeblattgrundkörper wird üblicherweise ebenso wie die Plättchen bzw. Segmente voneinander getrennt serienmässig gefertigt. Die Plättchen bzw. Segmente werden sodann auf die Zähne des Grundkörpers hart aufgelötet oder aufgeschweisst. Im Anschluss daran wird das Sägeblatt endgefertigt. Der Zusammenbau eines Kreissägeblattes ist symbolisch in den Fig. 5a-g dargestellt, eines Bandsägeblattes in den Fig. 3 und 4. Dieser Zusammenbau entspricht dem Stand der Technik. Er hat sich bewährt. Damit verbunden ist jedoch ein ziemlicher maschineller Aufwand. Für praktisch jeden Arbeitsgang wird eine eigene Vorrichtung benötigt, die wiederum über eigene Antriebe, Spannvorrichtung usw. verfügt, wodurch die Einrichtung einer Werkstatt für den Zusammenbau von gebauten Sägeblättern aufwendig und teuer ist. Der Grund für die bisher erforderliche Vielzahl von Einzelmaschinen liegt nach bisheriger Meinung der Fachwelt vor allem in den an und für sich unterschiedlichen Arbeitsvorgängen und in der bei jedem Arbeitsvorgang geforderten Präzision, die erforderlich ist, um ein gebautes Sägeblatt nicht unnötigem Verschleiss zu unterwerfen.

Der Erfindung liegt die Aufgabe zugrunde, eine hinreichend präzise und integrierte Vorrichtung für den Zusammenbau von gebauten Sägeblättern zu schaffen, die auf die Vielzahl von bisher üblichen Einzelmaschinen verzichtet und daher eine wesentlich ökonomischere Fertigung - vor allem bei kleineren Stückzahlen - erlaubt, wobei die Vorrichtung insbesondere für die Sägeblattherstellung im handwerklichen Bereich einsetzbar sein und für unterschiedliche grosse Sägeblätter verwendet werden können soll.

Diese Aufgabe wird durch eine Vorrichtung mit den Merkmalen des Anspruches 1 gelöst. Die erfindungsgemässe Anordnung spart Raum und ermöglicht einen optimalen Fertigungsablauf mit kurzen Wegen und hoher Präzision. Das zu bearbeitende Sägeblatt muss - unabhängig von seinem Durchmesser - nur einmal eingespannt werden und verbleibt bis zur einsatzreifen Fertigstellung in bzw. an der erfindungsgemässen Vorrichtung.

Zusätzliche vorteilhafte erfindungsgemässe Ausgestaltungen, Weiterbildungen und Varianten dazu sind in den abhängigen Ansprüchen beschrieben.

Weitere Varianten und Vorteile dazu ergeben sich aus der beispielhaften Darstellung und Beschreibung eines Ausführungsbeispieles. Es zeigen dabei:
- Fig.1: Eine Draufsicht auf eine erfindungsgemässe Vorrichtung;

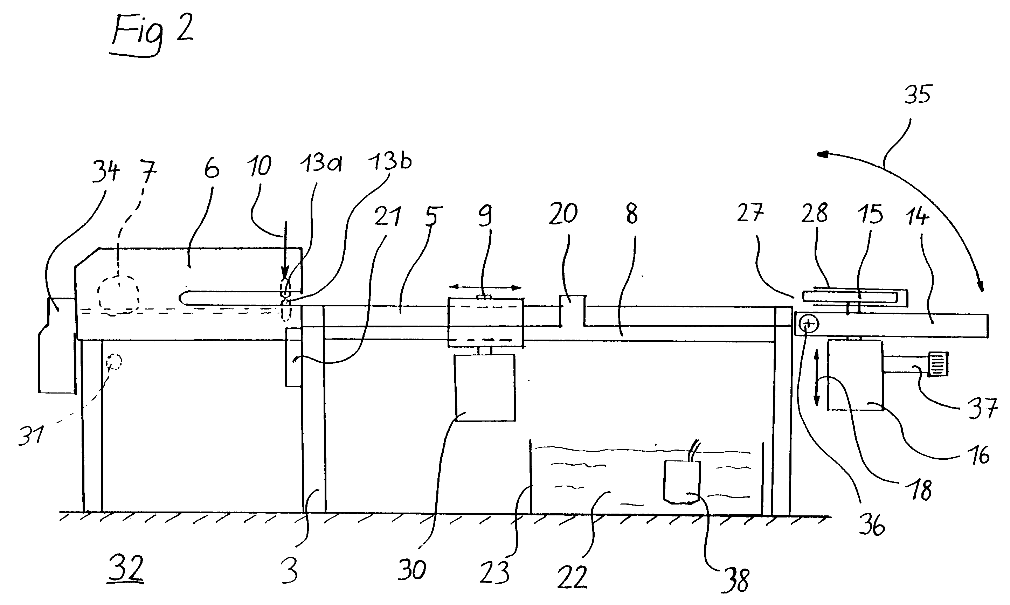

- Fig.2: eine Ansicht derselben Vorrichtung mit abgenommenen Rollentisch;
- Fig.3 und 4: die symbolische Bestückung eines Bandsägestahlkernes und
- Fig.5: den erfindungsgemässen Ablauf der Bestückung eines Kreissäge-Stahlkernes mit Hartstoffsegmenten.

Die Figuren werden zusammenhängend und übergreifend beschrieben. Sie zeigen ein Gestell 3, das am Boden 32 abgestützt ist. Es trägt einen Support 5, auf dem ein Aufnahme-schlitten 1 fahrbar gelagert ist. Der Aufnahme-schlitten 1 verfügt an seinem oberen Bereich über eine Halterung 9, auf der ein herkömmlicher Sägeblatt-Stahlkern 2 mit herkömmlichen Mitteln, z.B. einer Spannmutter, befestigt werden kann. Strichliert sind drei verschiedene Stahlkerne 2a-c eingezeichnet, die beispielsweise in die jeweils angedeuteten Stellung mit dem Schlitten 1 verfahren werden können, um dort zu verharren. Die Stahlkerne 2a und c zeigen symbolisch etwa die Kerne mit dem kleinstmöglichen Durchmesser, der Kern 2b deutet den maximal bearbeitbaren Durchmesser an. Die Erfindung erlaubt somit einen universellen Einsatz im Hinblick auf unterschiedliche Stahlkerndurchmesser.

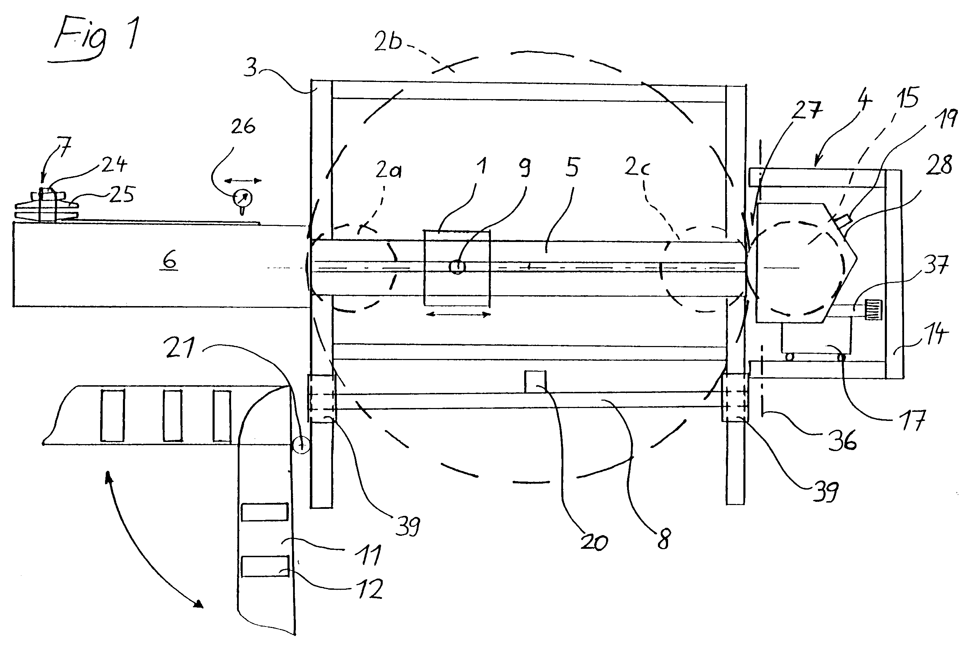

An seiner Unterseite ist am Aufnahmeschlitten 1 ein Getriebemotor 30 angeflanscht, der über eine Welle mit der Halterung 9 derart verbunden ist, dass er den Sägeblattstahlkern 2 in seiner Erstreckungsebene mit variabler Drehzahl zu drehen vermag. Für den Zweck des Spannens bzw. Geraderichtens ist eine Walzenvorrichtung 6 mit eigenem Rollenantrieb 34 symbolisch dargestellt, wobei dort der Stahlkern 2 mit oder an seiner Halterung 9 frei drehbar sein muss. Die Walzenvorrichtung 6 umfasst zwei gegen-einander gerichtete Stahlrollen 13a und b, von denen mindestens die obere 13a höhenverstellbar ist (Pfeil 10). Mit den stahlrollen 13 kann auf den Stahlkern 2 entsprechend allfälligen Deformationen (Verwerfungen) ein Druck aufgebracht werden, um die Deformationen zu korrigieren. Fig.1 zeigt den Kern 2a und den Kern 2b in etwa vor einer solchen Spann- bzw. Rollierposition.

An der Walzvorrichtung 6 ist ein Kontrollbock 7 mit einer Präzisionsspindel 24 und zwei Präzisionsflansche 25 angebracht, an dem eingespannte Sägeblatt-Stahlkerne 2 auf Verwerfungen und Masstoleranzen mittels Messuhr 26 kontrolliert werden können. Ausserdem findet sich dort ein pneumatisch regelbarer Druckzylinder 31, der - 90° um den Umfang eines zu kontrollierenden Sägeblattes versetzt - das Erfassen von Spannungen und Verwerfungen im Stahlkern 2 ermöglicht. Seine Funktion sieht man in Fig.5f (Pfeil 31).

Am anderen Ende des Supports 5 befindet sich eine schwenkbare Schleifvorrichtung 4, deren erfindungsgemässe Aufgabe es ist, Stahlkerne (zB. 2b oder 2c) vor dem Auflöten der Hartstoffsegmente und auch danach einerseits an derem Umfang auf Mass zu schleifen (dargestellte Position) und andererseits auch seitlich allfällige Unebenheiten zu begradigen ( bei um 90° geschwenkter Position der Schleifvorrichtung 4 - gem. Pfeil 35; vgl. Fig.5d).

Die Schleifvorrichtung 4 umfasst einen um eine gestellfeste Achse 36 schwenkbaren Rahmen 14, an dem ein mittels Mikrometerschraube 37 zustellbarer Schlitten 17 gelagert ist. Der Rahmen ist von Hand oder motorisch, insbesondere pneumatisch schwenkbar bzw. verstellbar. Der Schlitten 17 trägt einen Antriebsmotor 16 mit einer Schleifscheibe 15, welche durch eine Abzugssicherheitshaube 28 mit einem Sichtfenster 27 abgedeckt ist. Die Haube 28 ist mit einer Absaugvorrichtung 19 versehen. Bevorzugt arbeitet die Schleifvorrichtung 4 trocken. Für die gleichmässige Abnutzung der Schleifscheibe 15 ist ein nicht näher dargestellter pneumatischer Antrieb 18 vorgesehen, der den Antriebsmotor 16 mit der Schleifscheibe 15 innerhalb des Rahmens 14 oszillierend hebt und senkt (Doppelpfeil).

Etwa parallel zum Support 5 ist weiters eine über arretierbare Gleitschuhe 39 am Gestell 3 verschiebbare Lötbrücke 8 vorgesehen, die wenigstens eine Kühlbacke 20 trägt, welche an den entsprechenden Bereichen der Stahl-kerne 2 zur Anlage gebracht werden kann, an denen die Hartstoffsegmente angelötet werden sollen. Es gibt dabei drei Kühlbacken, wovon zwei den Stahlkern 2 von oben und unten im Bereich der Lötstelle beaufschlagen und die dritte Kühlbacke höhenverstellbar ist und während des Lötvorganges das Hartstoffsegment stützt. Die Kühlbacken 20 reduzieren die Wärmeausbreitung im Stahlkern 2, wodurch allfällige Wärmespannungen reduziert werden können. Die Kühlbacke wird von Kühlflüssigkeit 22 aus einem Kühlflüssigkeitstank 23 mittels Pumpe 38 und nicht gezeigten Leitungen gekühlt.

Seitlich des Gestells 3 ist ein um eine Achse 21 verschwenkbarer Rollentisch 11 mit einer Rollenfläche 12 vorgesehen, der zur Ablage und zum Vorschub schwerer Bandsägeblätter 2 dient. Diese können über den Rollentisch 11 gut abgestützt werden, so dass sie der Walzvorrichtung 6, und der Lötbrücke 8 zugeführt werden können. Der Rollentisch 11 ist verschwenkbar, was das Handling erleichtert.

In den Fig. 3 und 4 ist das Auflöten von Hartstoffsegmenten 29 auf ein Bandsägeblatt 2d und das anschliessende Geraderichten zwischen den Rollen 13 dargestellt, wie es mit der erfindungsgemässen Vorrichtung einwandfrei durchgeführt werden kann.

Die Fig. 5a-g zeigen den gesamten Bearbeitungsvorgang mit einer erfindungsgemässen Vorrichtung schematisch: Nach dem Aufspannen des Stahlkernes 2 an der Halterung 9, wird er nach rechts zur Schleifvorrichtung 4 geschoben und dort rund nachgeschliffen (5a). Anschliessend wird er in eine mittlere Position am Support 5 zurückgeschoben, um dort in Verbindung zur Lötbrücke 8 gebracht zu werden, wonach die Hartstoffsegmente aufgelötet werden (5b). Anschliessend werden diese wieder in der rechten Position des Aufnahme-schlittens 1 rundgeschliffen (5c). Sodann wird die Schleifvorrichtung um 90° geschwenkt und die Seitenflanken des Sägeblattes 2 mit den Hartstoffsegmenten nachgeschliffen. Die sich dabei ergebenden Toleranzen werden sodann am Kontrollbock 7 nachgeprüft (5e). Gegebenenfalls kann Schritt (5d) wiederholt werden. Sodann werden noch am Kontrollbock 7 allfällige Verwerfungen des Stahlkernes 2 nachgemessen und als Reaktion darauf in der Walzvorrichtung 6 ausgeglichen (5g), wonach gegebenenfalls die Messung (5f) nochmals wiederholt werden kann.

## Patentansprüche

1. Vorrichtung für das Bestücken von Sägeblatt-Stahlkernen mit Hartstoffsegmenten (29), mit einem Gestell (3), einer Einspannvorrichtung für die Aufnahme eines Sägeblattes (2) und einer Schleifvorrichtung (4) am Gestell (3), dadurch gekennzeichnet, dass die Einspannvorrichtung als Aufnahmeschlitten (1) ausgebildet ist und verschieblich auf einem Support (5) festgelegt ist, der einerends durch die Schleifvorrichtung (4) und andererends durch eine am Gestell (3) festgelegte Walzvorrichtung (6) begrenzt ist, wobei der Walzvorrichtung (6) ein Kontrollbock (7) gestellfest zugeordnet ist, und wobei am Gestell (3) weiters eine verschieb- oder verschwenkbare Lötbrücke (8) angeordnet ist.

2. Vorrichtung nach Anspruch 1, dadurch gekennzeichnet, dass der Aufnahmeschlitten (1) mit auswechselbaren Halterungen (9) für unterschiedliche Sägeblattdimensionen bestückbar ist.

3. Vorrichtung nach Anspruch 1 oder 2, dadurch gekennzeichnet, dass der Aufnahmeschlitten (1) massgenau verschiebbar und verriegelbar ist, und/oder dass die Halterungen (9) zusammen mit einem eingesetzten Kreissägeblatt (2a) entweder manuell oder über einen Getriebemotor (30) rotierbar sind.

4. Vorrichtung nach einem der vorhergehenden Ansprüche, dadurch gekennzeichnet, dass an dem Gestell (3) - insbesondere für die Aufnahme von Bandsägeblättern (2d) seitlich ein Rollentisch (11) angebaut ist, dessen Rollenfläche (12) vorzugsweise um eine vertikale Achse drehbar ist.

5. Vorrichtung nach einem der vorhergehenden Ansprüche, dadurch gekennzeichnet, dass die Schleifvorrichtung (4) einen - insbesondere um 90 Grad - um eine horizontale Achse (36) schwenkbaren Rahmen (14) aufweist, der mindestens eine Schleifscheibe (15) und einen Antriebsmotor (16) dafür lagert bzw. aufnimmt.

6. Vorrichtung nach Anspruch 5, dadurch gekennzeichnet, dass der Rahmen (14) mit einem Kreuzschlitten (17) versehen ist, der eine vertikale Oszillationsbewegung der Schleifscheibe (15) am Umfang des Sägeblattes (2) ebenso wie ein kontinuierliches Zustellen des Schleifscheibenvorschubes zulässt, wobei für das Erzielen der Oszillationsbewegung vorzugsweise ein pneumatischer Antrieb (18) vorgesehen ist.

7. Vorrichtung nach einem der vorhergehenden Ansprüche, dadurch gekennzeichnet, dass dem Gestell (3) zumindest für den Bereich der Schleifvorrichtung (4) eine Absaugvorrichtung (19) zugeordnet ist, welche vorzugsweise über eine Abzugssicherheitshaube (28) mit einem Sichtfenster (27) verfügt.

8. Vorrichtung nach einem der vorhergehenden Ansprüche, dadurch gekennzeichnet, dass die Lötbrücke (8) Kühlbacken (20) für das Abkühlen der Lötstellen aufweist, die vorzugsweise durch Kühlflüssigkeit (22) aus einem Flüssigkeitstank (23) kühlbar sind.

9. Vorrichtung nach einem der vorhergehenden Ansprüche, dadurch gekennzeichnet, dass der Kontrollbock (7) eine Präzisionsspindel (24) und Präzisionsflansche (25) für das Auflegen der Sägeblätter (2) aufweist, wobei ihm ein - vorzugsweise pneumatischer regelbarer - Zylinder (31) und eine verstellbare Messuhr (26) zugeordnet ist.

## Claims

1. Apparatus for providing steel saw blade cores with hard segments (29), having a frame (3), a clamp for holding a saw blade (2) and a grinder (4) on the frame (3), characterized in that the clamp is in the form of a slide (1) and is displaceably mounted on a support (5) which is delimited at one end by the grinder (4) and at the other end by a roller device (6) fixed to the frame (3), a control block (7) being coordinated with the roller device (6) and fixed to the frame, and furthermore a displaceable or rotatable solder bridge (8) being arranged on the frame (3).

2. Apparatus according to Claim, 1, characterized in that the slide (1) can be equipped with interchangeable holders (9) for different saw blade dimensions.

3. Apparatus according to Claim 1 or 2, characterized in that the slide (1) can be displaced and locked with dimensional accuracy and/or that the holders (9), together with an inserted circular saw blade (2a), can be rotated either manually or by means of a gear motor (30).

4. Apparatus according to any of the preceding Claims, characterized in that a roller table (11) whose roller surface (12) is preferably rotatable about a vertical axis is installed laterally on the frame (3), in particular for holding bandsaw blades (2d).

5. Apparatus according to any of the preceding Claims, characterized in that the grinder (4) has a frame (14) which can be rotated, in particular through 90 degrees, and bears or holds at least one grinding wheel (15) and one drive motor (16).

6. Apparatus according to Claim 5, characterized in that the frame (14) is provided with a compound slide (17) which permits a vertical oscillating movement of the grinding wheel (15) at the circumference of the saw blade (2) as well as continuous advance of the grinding wheel feed, a pneumatic drive (18) preferably being provided for achieving the oscillating movement.

7. Apparatus according to any of the preceding Claims, characterized in that an extractor (19) which preferably has a safety extraction hood (28) with a sight window (27) is associated with the frame (3), at least for the region of the grinder (4).

8. Apparatus according to any of the preceding Claims, characterized in that the solder bridge (8) has cooling jaws (20) for cooling the solder points, which are preferably coolable by cooling liquid (22) from a liquid tank (23).

9. Apparatus according to any of the preceding Claims, characterized in that the control block (7) has a precision spindle (24) and precision flanges (25) for mounting the saw blades (2), a cylinder (31), which is preferably pneumatically controllable, and an adjustable dial gauge (26) being associated with said control block.

## Revendications

1. Dispositif pour équiper des noyaux en acier de lame de soie avec des segments en matériaux durs (29) et, un bâti (3), un dispositif de serrage destiné à recevoir une lame de soie (2) et un dispositif de meulage (4) prévu sur le bâti (3), caractérisé en ce que le dispositif de serrage est réalisé sous forme de chariot de réception (1) et est fixé de façon mobile sur un support (5), qui est délimité, à une extrémité, par le dispositif de meulage (4) et, à l'autre extrémité, par un dispositif à rouleau (6) fixé sur le bâti (3), au dispositif à rouleau (6) étant associé, de façon rigide par rapport au bâti, un bloc de contrôle (7) et, sur le bâti (3), étant disposé en outre un pont de brasure (8) pouvant être soumis à un déplacement ou à un pivotement.

2. Dispositif selon la revendication 1, caractérisé en ce que le chariot de réception (1) peut être équipé de fixations (9) remplaçables, pour différentes dimensions de lames de scie.

3. Dispositif selon la revendication 1 ou 2, caractérisé en ce que le chariot de réception (1) est susceptible d'être déplacé et verrouillé de façon précise dimensionnellement et/ou en ce que les fixations (9) peuvent tourner, conjointement avec une lame de soie circulaire (2a) insérée, soit manuellement, soit par l'intermédiaire d'un moto-réducteur (30).

4. Dispositif selon l'une des revendications précédentes, caractérisé en ce que, sur le bâti (3) - en particulier pour supporter des lames de soie en ruban (2d) - est monté latéralement une table à rouleau (11), dont la face (12) pourvue de rouleaux est susceptible de tourner, de préférence autour d'un axe vertical.

5. Dispositif selon l'une des revendications précédentes, caractérisé en ce que le dispositif de meulage (4) présente un cadre (14) pivotant - en particulier pouvant pivoter de 90° - servant de support, respectivement de logement, à au moins un disque de meulage (15), et à un moteur d'entraînement (16).

6. Dispositif selon la revendication 5, caractérisé en ce que le cadre (14) est pourvu d'un chariot à mouvement croisé (17), qui permet un mouvement d'oscillation vertical du disque de meulage (15) sur la périphérie de la lame de soie (2), ainsi qu'une approche continue de l'avancement de disque de meulage, de préférence un entraînement pneumatique (18) étant prévu pour obtenir le mouvement d'oscillation.

7. Dispositif selon l'une des revendications précédentes, caractérisé en ce qu'au bâti (3) est associé, pour la zone du dispositif de meulage (4), au moins un dispositif d'aspiration (19) qui dispose de préférence d'un capot de sécurité d'extraction (28) avec une fenêtre d'observation (27).

8. Dispositif selon l'une des revendications précédentes, caractérisé en ce que le pont de brasure (8) présente des mâchoires de refroidissement (20), destinées au refroidissement des points de brasure et pouvant être refroidies de préférence par un liquide de refroidissement (22) venant d'un réservoir à liquide (23).

9. Dispositif selon l'une des revendications précédentes, caractérisé en ce que le bloc de contrôle (7) présente une broche de précision (24) et des brides de précision (25) pour la pose de la lame de soie (2), un vérin (31) - de préférence réglable pneumatiquement - et un comparateur de mesure (26) réglable lui étant associés.
